# EUROPEAN PATENT APPLICATION

(11) **EP 3 896 327 A1**
(43) Date of publication of application: **20.10.2021**
(21) Application number: 21460021.5
(22) Date of filing: 14.04.2021
(51) Int. Cl.: F17C 1/06

(54) **PRESSURE TANK FOR FLUID, PARTICULARLY HYDROGEN**

(30) Priority: 15.04.2020 PL 43355420
(71) Applicant: Bogucki, Bohdan, 81-553 Gdynia (PL)
(72) Inventor: Bogucki, Bohdan, 81-553 Gdynia (PL)
(74) Representative: Czabajski, Jacek

(57) **Abstract**

A pressure tank for fluid, particularly hydrogen, which contains an internal tank (1) in the form of the top wall (2) and of the bottom wall (3) connected with side walls. The walls (2, 3) of the internal tank (1) have the shape of a surface made of connected, repeatable overlapping spherical fragments, such that they have the shape similar to the shape of the surface of a quilted mattress when viewed from the outside. Elements connecting the bottom wall (3) and the top wall (2) of this internal tank are placed at the quilting points. The connecting elements are provided as pins (7). Both ends of each pin (7) penetrate to the outside through openings in opposite walls (2, 3). A fixing element in the form of a nut (8) is present on each end of the pin (7). Sets of tendons (10) wrapped around walls (2, 3) of the internal tank (1) are located along the rows of pins (7). One set of tendons (10) is running between one pair, and another set of tendons (10) is running between the second pair of opposite side walls, on both sides of the tank (1), such that said sets of tendons (10) cross under the nut (8) of each pin (7). The composite textile comprises at least one, first layer (12) which wraps the top and the bottom wall (2, 3) and the first pair of opposite side walls of the internal tank (1). The second textile layer (13) is wrapped around the top and the bottom wall (2, 3), and around the second pair of opposite side walls of the tank (1). The third layer (14) of the textile is wrapped around the side edges (4) of the internal tank (1).

## Description

The subject of the invention is a pressure tank for fluid, particularly hydrogen. The tank is intended for storage and transport of any fluid, particularly liquid, gaseous or supercritical hydrogen and may be used as a tank for fuel for a mobile device, including a car. The tank may be positioned flat under the floor of a ground vehicle or may be used as a fuel tank for an airplane or a water vessel using the shape of a hull. Depending on the size and the intended use, the tank may be provided for use in a system for refuelling empty tanks with fluid at a petrol station, or in an exchange system exchanging an empty tank for a full tank.

A known solution of a tank for fluids is presented in the patent publication US 2341044. According to this solution, a composite tank for fluid is made of multiple spherical, segmented parts, each of which is limited at least on one side with a partitioning element. The partition forms multiple separate compartments and contains means used to equalise pressure in such compartments. The tank is made of truncated, spherical parts located such that the shape forms an approximately rectangular structure.

Another known solution of a tank for liquid hydrogen is disclosed in the patent publication JP2000130690. This solution presents a tank designed for storage of liquid hydrogen for a vehicle powered by a fuel cell. The tank is designed to maintain the sudden temperature distribution inside the tank, the interior of which is divided into multiple partitions using vertical partitioning walls, excluding the area in the top part, where a distance is maintained under the cover of the tank. Thermally insulating material with a low heat transfer coefficient was used as the material of the partitioning wall, preferably plastic or a composite material. Individual, maximum internal widths of the partitions in a plane orthogonal to the partitioning wall are limited to 50 mm or less. As a consequence, liquid hydrogen may be stored in a stable manner when cooled, at low temperatures.

The next known solution of a liquefied gas tank is presented in the disclosure of the international patent application WO 2017/194818, where a two compartment or a multiple compartment tank is described. The tank is intended for storage of liquefied natural gas and contains at least two sections in the form of cylindrical tanks connected with their side walls. Each cylindrical tank has a curved top surface and a curved bottom surface. Tank sections are connected, such that the tank has a corrugated top surface and a corrugated bottom surface, while the contact points of the side walls are flat. Each individual tank is connected in a manner enabling flow with the neighbouring tank via at least one flow duct. A horizontal flow path is formed between the lowest points of the neighbouring tanks.

Another known solution of a gas tank is disclosed in the patent document FR3079172. This known solution is related to a gas tank intended for electricity generation inside a motor vehicle. The tank is provided with a housing delimiting at least two spherical storage compartments. The communication zone between compartments is characterised by a distance between the middle points of two spherical compartments, smaller than the sum of internal radii of these compartments.

Another known solution is disclosed in the patent document EP 3056792. A pressure tank is presented here, comprised of multiple, connected, spherical compartments. Each of the spherical compartments is partially truncated on both sides, containing at least two through openings connected with through openings of neighbouring, spherical compartments. Such connected, spherical compartments form the tank structure.

The tank for fluid storage, particularly for liquid and/or gaseous or supercritical hydrogen, comprising a pressure tank fuel for a mobile device, must meet two requirements. Resistance to internal pressure is the first and the main requirement. Meeting this requirement leads to the proposed, spherical shape of the tank, characterised by the highest resistance to internal pressure out of all available shapes. A cylindrical tank is less resistant. Both these solutions, however, are unfavourable because of the degree of use of the space available inside a mobile device, for example a vehicle, for placement of such a tank. This space is usually similar to a cuboid in shape. It is, obviously, possible to place a spherical or a cylindrical tank inside a space similar to a cuboid, but parts of such a space remain unused. The second requirement is thus the requirement of a shape similar to a flat cuboid, which enables the use of space intended for the tank within the vehicle structure. From the technical point of view, both these requirements are contradictory. The invention solves this problem.

According to the invention, a pressure tank for fluid, particularly hydrogen, contains an internal tank, comprising a flat unit of the top wall and of the bottom wall connected with side walls, such that the fluid stored inside the tank flows freely within the entire volume of the internal tank. The walls of the internal tank have the shape of a surface comprised of connected, repeated, spherical fragments, such that the top wall and the bottom wall of the internal tank viewed from the outside has the form similar in shape to the surface of a quilted mattress, wherein elements connecting the top and the bottom wall of this internal tank are located at the quilting points. The internal tank is wrapped with at least one composite external layer, while the connecting elements form pins, wherein both ends of each of the pins penetrate to the outside, through openings in opposite, top and bottom walls of the internal tank. At least one first fixing element is located on both ends of every pin.

According to the invention, the pressure tank for fluid, particularly hydrogen, is characterised in that sets of ties form tendons wrapped around the walls of the internal tank are running along the rows of pins, wherein one set of tendons is running between one pair of the opposite side walls, on both sides of the tank, while the other tendons' set is running between the second pair of opposite side walls, on both sides of the tank, such that said tendons on each side of the internal tank cross, wherein tendons of said crossed tie sets cross from the external side of the top wall and from the external side of the bottom wall, under the fixing element of each of the pins.

In a preferred embodiment of the invention, both ends of the pins are threaded, while nuts are the fixing elements.

According to the invention, a layer of external composite textile may comprise at least one, first layer of carbon textile and it may be wrapped around the top and the bottom wall and the first pair of opposite side walls of the internal tank.

The tank according to the invention preferably contains at least one, second layer of carbon textile, wrapped around the top and the bottom wall, and around the second pair of opposite side walls of the internal tank.

The tank according to the invention may contain at least one, third layer of carbon textile, wrapped around the side walls of the internal tank.

The pressure tank according to the invention allows a system of pins and continuous, uniform tendons to be used instead of the required membranes or reinforcing rings between tank compartments known from the art. This is possible thanks to the use of materials with high ultimate tensile strength. The production cycle of the pressure tank according to the invention may be made significantly shorter, as it does not require the demanding step of carbon fibre threading through tunnels within the volume of the tank, replaced with fixed pins according to the invention. Winding the tendons is performed using ready strips made of carbon fibre, and winding the external fabric layers is performed using strips of ready, wide, isotropic fabric made of carbon fibre, contrary to the wrapping with fibre yarn or tow known from the art. The tendons and the surface of the carbon fibre are tensioned locally, using fixing elements, for example nuts on pins, thus eliminating the second, time consuming step known from the art and ensuring uniform distribution of the textile on the surface of the external tank. The function of the nuts pressing the tendons and the textile at the quilting points allows a product in the form of a prestressed tank to be obtained. Installation of steel pipes inside the tank results in stable attachment of the valves in boss openings and improves the rigidity of the entire structure, required for dynamic operation of the hydrogen tank of a mobile device, subjected to significant accelerations.

The object of the invention has been presented in the embodiments in the attached drawing, in which individual figures of the drawing represent as follows:
Fig. 1 - a perspective view of the tank, including valves and caps.
Fig. 2 - projections of the tank.
Fig. 3 - a semi-cross-section, semi-view of the pin with nuts.
Fig. 4 - a nut.
Fig. 5 - a view of a tank fragment with straight tendons.
Fig. 6 - a view of a tank fragment with tendons.
Fig. 7 - a cross-section through the tank fragment according to Fig. 6.
Fig. 8 - schematically presents tank wrapping with the textile, in one direction.
Fig. 9 - schematically presents tank wrapping with the textile, in another direction.
Fig. 10 - schematically presents tank wrapping with the textile, around an edge.
Fig. 11 - a cross-section through a tank fragment before textile application.
Fig. 12 - a cross-section through a tank fragment after textile application.
Fig. 13 - a cross-section through a tank after nut tightening.
Fig. 14 - a cross-section through the transition zone passing through the tank supply line housing.

The pressure tank for fluid is presented in embodiments in the attached figures, in embodiments intended for hydrogen storage and distribution, in the form of a hydrogen storage tank supplying a mobile device in the form of a vehicle with hydrogen. The tank is presented in a version intended for installation inside a car.

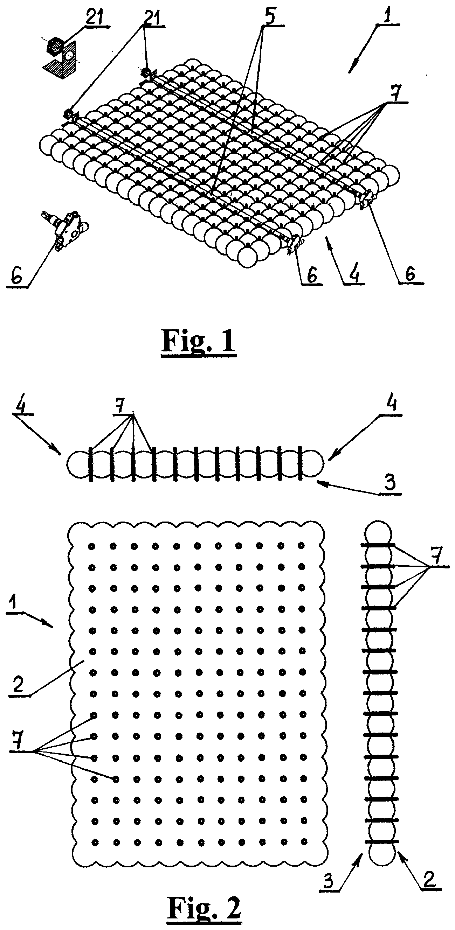

The tank contains an internal tank 1, presented in Fig. 1 and Fig. 2, as well as in the following figures. The internal tank 1 comprises a flat unit of the top wall 2 and of the bottom wall 3 connected with side walls 4. Hydrogen stored inside the tank freely flows throughout the entire volume of the internal tank.

Fig. 1 presents the tank 1 in a perspective view, where the tank looks as a unit of connected, overlapping spherical spaces. This figure also shows schematically supplying pipes 5 with valves 6 for hydrogen supply and drawing to the tank and from the tank 1, and with caps 21. An example valve 6 and a cap 21 are presented separately, in Fig. 1.

Fig. 2 shows the shape of a tank according to Fig. 1 in three standard projections, namely, as top view of the top wall 2 and as a side view of the shorter edge from one side and as a view of the longer edge from the other side. Both Fig. 1 and Fig. 2 show pins 7 connecting the top wall 2 with the bottom wall 3 of the tank. Side projections according to Fig. 2 show a cross-section through the tank 1, in order to present the function of pins 7 as elements connecting the top wall 2 with the bottom wall 3 of said tank 1. For clarity of the figure, fixing elements in the form of nuts on pins, shown in subsequent Figures, are not shown in the side projections shown in Fig. 2. The tank 1 is made of plastic, ex. polyamide, in a mould, in the form of a top wall 2 and of a bottom wall 3, which are then assembled together and joined through welding or gluing. The tank may also be obtained as a monolithic body, made of walls 2, 3, 4 comprising a single element obtained in a rotomoulding or blowing process. Fig. 1 and Fig. 2, as well as the following Figures show that the tank viewed from outside resembles the shape of a quilted mattress, with pins 7 present at the locations of quilts connecting the walls 2 and 3.

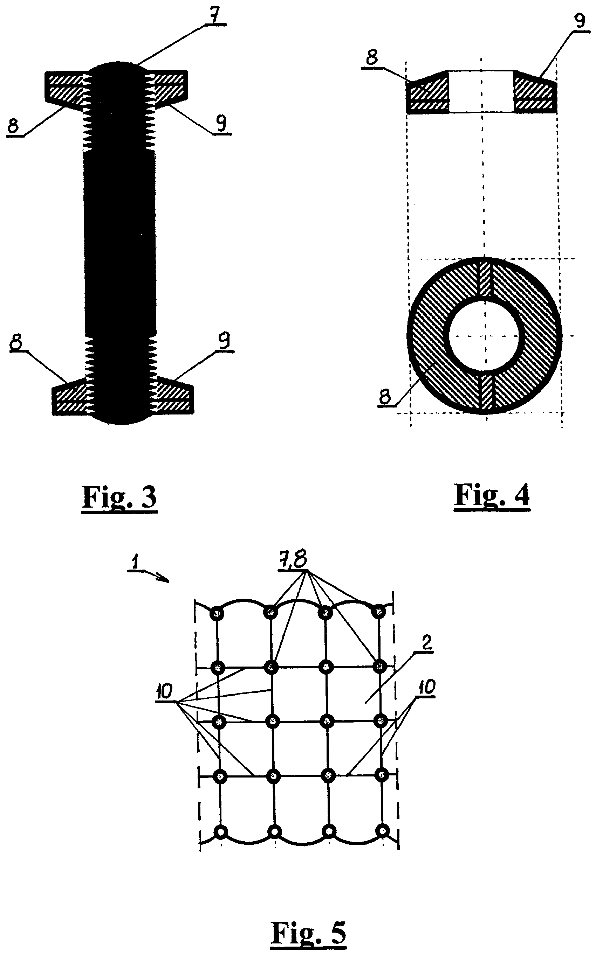

A pin 7 is presented in a semi-cross-sectional semi-view in Fig. 3. The metal pin 7, made of sintered tungsten carbide in this embodiment, has the form of a pin, threaded on both ends. In this form, the pin 7 is threaded through openings prepared in the top wall 2 and in the bottom wall 3 of the tank, at the quilting points. These locations have been previously formed during the process of formation of walls 2, 3 of the tank 1, wherein the walls have the shape of multiple connected fragments of a spherical surface, as can be seen particularly well in side projections in Fig. 2. Fig. 3 also schematically shows nuts 8 on both threads of the pin 7. In the presented embodiment, the nut 8 is shown in two cross-section in Fig. 4. Fig. 3 shows that the nuts 8 threaded onto the pin 7 on both sides are directed towards each other with their conical surfaces 9. These conical surfaces 9 cooperate inside the tank 1 with quilt location areas of the surface of the top wall 2 and of the surface of the bottom wall 3 of said tank 1.

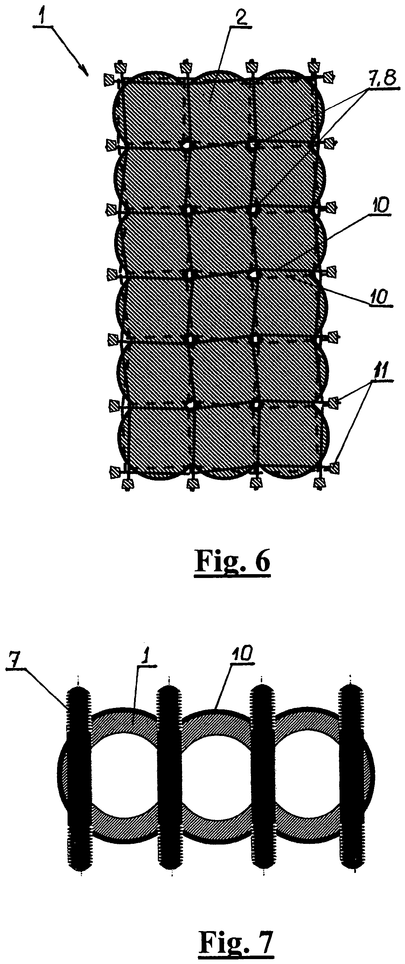

A fragment of the tank 1 is presented in Fig. 5. A view of the top wall 2 of this tank fragment is shown here. A view of the bottom wall 3 of this tank 1, not shown in the figure, is identical in this embodiment. Fig. 5 shows the first step of reinforcing the tank structure, wherein the tank contains wrapped tapes in the form of ties tendons 10. Tendons 10 are 5mm wide tapes wrapped around the tank 1, along its longer edge and along its shorter edge. Tendons 10 cross on the top wall 2 and on the bottom wall 3, at the quilting points visible in Fig. 5 as pins 7 with nuts 8. The crossing points of mutually perpendicular ties 19 are located under the nuts 8, removed during preparation of the weave made of tendons 10. Tendons 10 of the weave are shown in Fig. 6. The top surface 2 of the tank 1 is shown here. The tie tendon 10 presented in this Figure with a solid line is linear and alternates on the left side of one pin 7 and on the right side of another pin 7. Another tendon 10 presented in this Figure with a dotted line, running between the same pins 7, is linear and alternates on the right side of the same one pin 7 and on the left side of the same, another pin 7. Thus, the weave of two tendons 10 is based on each single 7, on both sides. The same tendons 10 rest on another pin 7, on two opposite sides. Tendons 10 of the top surface 2 and of the bottom surface 3 of the tank 1 are connected with each other via connectors 11, on side edges of the tank 1. The connectors 11 are an integral element of a long, single, continuous tendon 10 wrapped around the tank 1 on one side, and subsequently on the other side. Two ends of such a time are connected using connectors 11, once the tie wrapped around the tank 1 is formed.

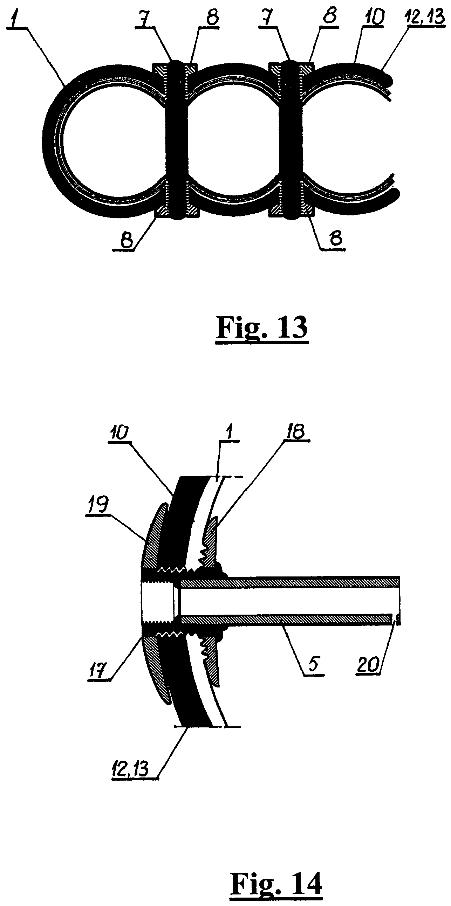

The weave of tendons 10 around the internal tank 1 is presented schematically in Fig. 7. Once both these crossing weaves of tendons 10 are formed, the weave is tightened at the quilting locations to the surface of the internal tank 1 using nuts 8, not shown in this figure. Pre-tensioning of the tank according to the invention is achieved at this stage. The tendons are made of 5mm wide carbon fibre tapes. In other embodiments of the tendons 10, each of the weaves may include more than two tapes and they may have a different width or a different shape. In a yet different embodiment shown in Fig. 13, the tendons 10 are tensioned later, together with the textile 12 and 13, using nuts 8 on pins 7.

A mantle made of isotropic textile made of carbon fibre provides additional reinforcement of the internal tank 1 with a tie of tendon 10 weaves in this embodiment. Known textiles of this type are woven in three directions, with yarn passing at an angle of 60°. Such a textile allows pins 7 to be placed between the textile fibres without damaging them.

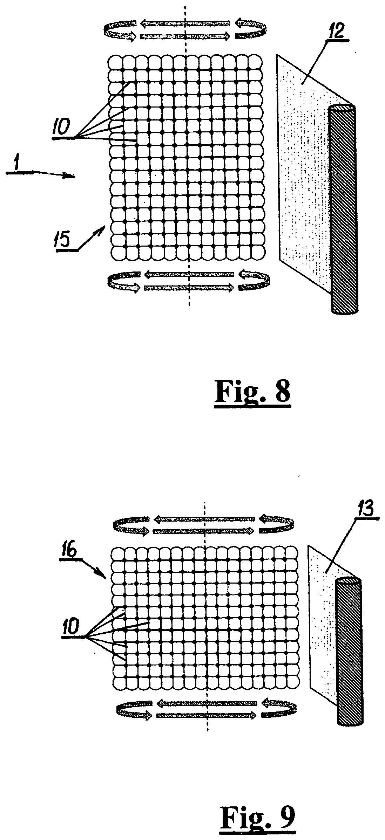

Fig. 8 shows the execution of the mantle with the first layer 12 of the textile covering the tank 1 with the tendon 10 weave pressed to the surface of the tank 1 by nuts 7. The first layer 12 is laid out around the tank 1 and forms a sleeve with a width corresponding to the length of the longer edges 15 of the tank 1. The layout direction of the textile layer 12 is shown in this figure using arrows.

Fig. 9 shows the execution of the second layer 13 as a band of textile wrapped around the tank 1 with the tendon 10 weave. The strip of the second layer 13 of the textile is laid out around the tank 1 containing a layer executed in the step shown in Fig. 8. In this step, shown in Fig. 9, a sleeve is formed with a width corresponding to the length of the shorter edges 16 of the tank 1. The layout direction of the mantle of the second layer 13 of the textile is shown in this figure using arrows.

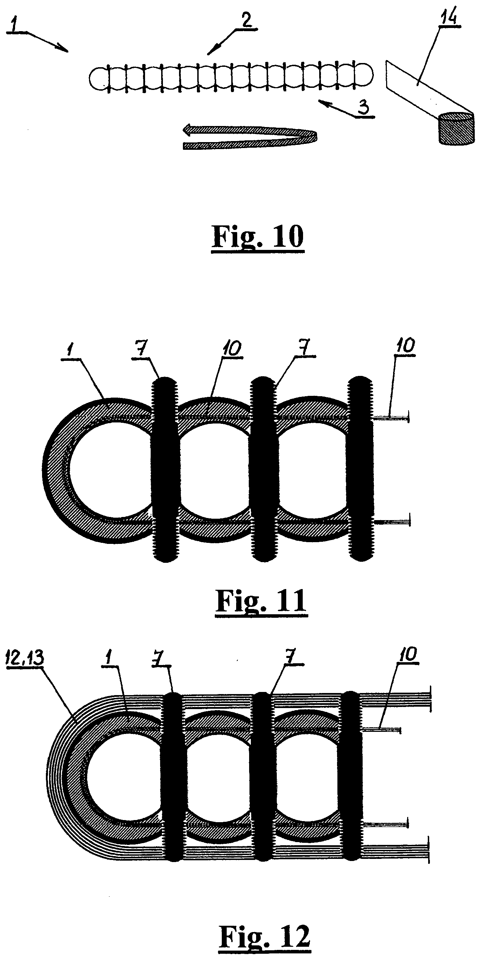

Fig. 8 and Fig. 9 show two stages of placing the first layer 12 and the second layer 13 of the textile on the internal tank 1 provided with a tie 10 weave. Layers 12, 13 of the carbon fibre textile are laid out in two directions and impregnated with a known, curable resin during individual stages. Threaded ends of pins 7 are guided over the mantle surface in the form of the layers 12, 13. Such a prepared tank 1 is wrapped around the edges 15, 16 with a mantle strip in the form of a strip of the third layer 14 of the carbon fibre textile. This is shown in Fig. 10.

The mantle of layers 12, 13 made of carbon fibre textile and of the tendon 10 wave is pressed to the surface of the internal tank 1 using nuts 8 on pins 7, at the quilting points. The nut 8 is shown in Fig. 3. In another embodiment, each pin 7 may be provided with the second fixing element in the form of a nut on each end, which presses at least one layer 12, 13 of the composite textile to the first pressure element in the form of the nut 8 and to the surface of the internal tank 1.

Fig. 11, Fig. 12 and Fig. 13 schematically shows individual stages of tank construction. Fig. 11 presents schematically the position of tendons 10 between the quilting points, at which pins 7 are placed. Fig. 12 illustrates the layout of the mantle on the internal tank 1 with the tendon 10 weave. Fig. 13 shows the nuts 8 tightening the weave 10 with the textile mantle to the surface of the internal tank 1. Tightening of nuts 8 in all quilting points resulted in pre-tensioning of the product in the form of a flat hydrogen tank.

Fig. 14 shows a cross-section through the transition zone passing through the housing of the internal tank 1, the tank supply line 5. The line 5 is used both to fill the tank 1 and to draw hydrogen in order to power the drive unit of the vehicle. The supply line 5 in this embodiment is terminated with a threaded boss 17 connected with the wall of the internal tank 1 and with the layers 12, 13 of the reinforcing textile. The boss 17 is provided with an internal nut 18 and an external not 19, between which the wall of the internal tank 1 and the structural reinforcement layers 12, 13 are clamped in this embodiment. The stub of the regulating and venting valve 6 is threaded into the threaded opening of the boss 17, used to fill the tank with hydrogen and/or to draw hydrogen from the tank, as well as to control overpressure caused by hydrogen temperature changes in relief device. The line 5 is a metal pipe with openings 20, which in this embodiment is provided with said valves 6 for hydrogen filling and/or drawing. In the embodiment of the invention shown in Fig. 1, the tank is provided with two lines 5, two ends of which are provided with valves 6 and two other ends are provided with caps 21. In another embodiment, the tank is provided with one or more than two lines 5, also intended to install the tank on the vehicle structure using fixtures, not shown in the Figure, threaded in instead of valves 6 or caps 21. The lines 5 may be used as the hydrogen draw points and as the tank installation points simultaneously.

The pressure tank according to the invention generally consists of four elements formed sequentially. These are the following elements: the internal tank 1, the metal pins 7 binding the opposite surfaces of the internal tank at the quilting locations, tendons 10 reinforcing the connection points of internal tank elements and the mantle of the external structural textile in the form of layers 12, 13, 14. The term quilting points is used to clearly define the location in the top surface 2 and in the bottom surface 3 of the tank, looking similar to a quilting point of a quilted mattress. The quilting points of the tank thus include all points, at which a pin 7 connecting the top wall 2 and the bottom wall 3 is passing between these walls 2, 3.

The internal tank 1 comprises an element imparting the tank the desired cuboid shape. It comprises of multiple overlapping spheres located in the same plane, with each sphere limited with four pins 7 at the top wall 2 and at the bottom wall 3. The internal tank is made of a material impenetrable to hydrogen and may be made of an aluminium alloy AA7075 or, in other embodiments, of stainless steel 316L or of any plastic. The formation of the internal tank includes centrifugal or blowing casting of the shape of the multiple compartment enclosed space inside a metal casting mould, similarly to an inflatable mattress. This may be performed by casting two identical halves in the form of the top wall 2 and the bottom wall 3, inside a mould of a flat pressure cast and combining these walls 2, 3. Another method of production of the internal tank is casting a monolithic tank with the desired shape in a rotomoulding or blowing process and heated until the thermoplastic granulate made of polyamide or polyethylene melts. In the first case, this may be a PA-6 granulate, e.g. Tarnamid T-27 GF20 GB10, filled with glass fibre and glass microspheres increasing the resistance and rigidity of the tank. UHMWPE, or a heavy polyethylene HDPE type with a long molecular chain and with multiple molecules may be used as the second type of the thermoplastic material. In this embodiment, elements of pins 7 are fixed at the nodal points of the internal tanks, cast over with the plastic and attached using protrusions present along the length of each pin.

The internal tank with spherical compartment after the halves are connected becomes an enclosed structure, with only four openings for pressure valves or caps and with a number of pins cast or attached and fixed at the quilting points in this particular embodiment. This requires two symmetrical, top wall 2 and bottom wall 3 of the internal tank 1 to be connected, taking into account the positions of pins 7 connecting both halves. The pins 7 are used to provide a tight connection by tightening nuts on both sides of two independent halves of the tank 1. Depending on the embodiment, a seal is placed between two casts or pressed elements or the elements are glued using a glue for smooth surfaces, or both halves are point welded.

The pin 7 is made of steel with increased resistance, e.g. 316L, 1.4410 type or of titanium with increased resistance, of the Ti Beta 3 alloy or of sintered tungsten carbide and is pre-threaded on both ends with a fine coil thread. The pins 7 may be placed in one of the halves of the top wall 2 and of the bottom wall 3 of the pressure cast and fixed during casting by overcasting them, thus distinguishing the cast of the bottom half, where the half of the top wall 2 has at this location only the opening for the pin 7, installed in the half of the bottom wall 3, intended for assembly and subsequently tightly closed with the matching pin 7, pressed tightly into the opening.

Tendons 10 of the weave are made of carbon fibre, as a wide and thin, unidirectional tape made of a bundle of unidirectional fibres and form a closed reinforcing hoop. The tape is wound onto the tank surface according to the calculated hoop width and includes multiple layers of carbon fibre, with an example width of 10mm and 0.21mm thick, wound sequentially along one of the recessed paths among the convex pressure compartments of the internal tank 1. Each such path is parallel to one of the X and Y axes of the tank and passes through all quilting points of the tank 1 lying on the line, bypassing pins 7 at such points, around such pins, on one side and then on the other side of subsequent pins 7. At both ends of the internal tank 1, the tape in the form of a tendon 10 passes along the path between two pressure spheres from one surface of the tank to the other, opposite surface of the tank and continues among the quilting points, to the second end of the tank, where the course is repeated along the given path as many times as is required to achieve the previously calculated number of coils ensuring formation of the weave tie of adequate thickness. Wrapping the tank with the tapes takes place inside an automatic CNC winding machine, in which the tank is fixed such that it can rotate around each of the selected axes X or Y. The order of tendon 10 wrapping may be different, and in particular distributed between all hoops of the structural reinforcement simultaneously or in parts.

Further reinforcement of the tank is performed in this embodiment using a textile woven using triaxial carbon fibre, with the textile weft passing at an angle of 60° against one another. Such a textile exhibits a quasi-symmetrical isotropic property of reaction to stretching forces in every direction and is an excellent cover of the surface of the inner tank. Because of the shape of the provided textile, a flat material rolled up into a roll, this shape has been taken into account in the application method used with individual material layers applied onto the tank surface, such that the textile is wounded sequentially or alternating, in three surfaces of the tank, on the winding machine. This is the same machine as the machine used before to wind the hoop reinforcements made of the unidirectional tape, enabling tank rotation around each of the axes X, Y and Z.

Before the outer layers of the textile are wound at eight corners of the tank 1, the reinforcing elements, not shown in the figures, are placed, in the shape of a sphere section inside, and in the shape of a cuboid apex outside.

Winding in one of the planes of the tank 1 walls means so many courses of layers 12 of the textile around one of the axes of the cuboid, which is approximated by the internal tank, such that half of the structural layer thickness calculated earlier during resistance calculations is achieved. Once the axis of the weave changes, the same number of textile coils in the form of layers 13 is wound, such that the desired weave thickness is achieved on two opposite walls 2, 3. After another change of the axis of the internal tank, another textile weave is wound around the remaining walls, and thus a uniform distribution of thickness is achieved on all sides of the cuboid, with thickness defined in the calculations. In this embodiment, the weave textile 12, 13, 14 is pre-impregnated with a thermosetting resin.

The next stage of fixing the weave of the structural reinforcement includes stretching the weave at the quilting points. During application of individual textile layers, the pointed pins 7 are used to pierce the textile layers 12, 13, and the nuts 8 are threaded. Thus, the textile 12, 13 and the entire tank become tensioned, at the same time filling the free space at the quilting locations, between spherical areas of the surface 2, 3 of the tank.

After mechanical tensioning of the weave textile, in this embodiment the tank is subjected to heating in an autoclave, permanently achieving the shape of a flat pressure tank, retaining the initial, internal tension.

For aesthetic reasons, the tank may be covered with a layer of glass fibre, aramid fibre or gelcoat at the end of the production process, in order to cover the ends of pins 7 and nuts 8, at the same time providing protection against mechanical damage to the tank during use.

### List of designations used in the drawings

1. Internal tank
2. Top wall
3. Bottom wall
4. Side edge
5. Supply line
6. Valve
7. Pin
8. Nut
9. Conical surface of the nut
10. Tendon
11. Connector
12. First textile layer
13. Second textile layer
14. Third textile layer
15. Longer tank edge
16. Shorter tank edge
17. Threaded boss
18. Internal nut
19. External nut
20. Opening
21. Cap

## Claims

1. A pressure tank for fluid, particularly hydrogen, containing an internal tank comprising a flat unit of the top wall and of the bottom wall connected by side walls, such that fluid stored inside the tank freely flows throughout the entire volume of the inner tank, wherein the walls of the internal tank have the shape of a surface made of connected, repeated overlapping spherical fragments, such that the top wall and the bottom wall of the internal tank viewed from the outside has the form with a shape similar to the surface of a quilted mattress, with elements connecting the top wall and the bottom wall of this internal tank present at the quilting points, wherein the internal tank is wrapped by at least one, composite external layer, and the connecting elements are pins, wherein both ends of each of the pins penetrate to the outside through openings in opposite, top and bottom wall of the internal tank and at least one pressure element is present on both ends of each of the pins, **characterised in that** along the rows of pins (7) sets of tendons (10) wrapping the walls (2,3) of the internal tank (1) are present, wherein one set of the tendons (10) is running between one pair of opposite side walls, on both sides of the tank (1), while the second set of tendons (10) is running between the second pair of the opposite side walls, on both sides of the tank, such that said sets of tendons (10) cross on each side of the internal (1), wherein tendons (10) of said tendon (10) sets cross on the external side of the top wall (2) and on the external side of the bottom wall (3) of the internal tank (1), under the pressure elements of each pin (7).

2. The pressure tank according to Claim 1, **characterised in that** both ends of pins (7) are threaded, while fixing elements are provided as nuts (8).

3. The pressure tank according to Claim 1 or 2, **characterised in that** a layer of external composite textile comprises at least one, first layer (12) of the carbon textile which wraps the top and the bottom wall (2, 3) and the first pair of opposite side walls of the internal tank (1).

4. The tank according to Claim 3, **characterised in that** it contains at least one, second layer (13) of carbon textile, wrapped around the top and the bottom wall (2, 3), and around the second pair of opposite side walls of the internal tank (1).

5. The tank according to Claim 4, **characterised in that** it contains at least one, third layer (14) of carbon textile, wrapped around the side walls (4) of the internal tank (1).
